# EUROPEAN PATENT APPLICATION

(11) **EP 4 257 356 A1**
(43) Date of publication of application: **11.10.2023**
(21) Application number: 21903379.2
(22) Date of filing: 06.12.2021
(51) Int. Cl.: B32B 27/00, B32B 3/30

(54) **DECORATIVE SHEET AND DISPLAY DEVICE**

(30) Priority: 07.12.2020 JP 2020202975
(71) Applicant: Dai Nippon Printing Co., Ltd., Tokyo 162-8001 (JP)
(72) Inventor: YAMANAKA Naoto, Tokyo 162-8001 (JP)
(74) Representative: Müller-Boré & Partner Patentanwälte PartG mbB
(86) International application number: PCT/JP2021/044799
(87) International publication number: WO 2022/124279

(57) **Abstract**

[Object] To provide a decorative sheet excellent in designability.

[Solution] A decorative sheet (20) includes a design layer (22), and a transparent resin layer (23) laminated on the design layer (22). Light transmitting portions (24) formed as apertures of the design layer (22) are provided. Asperities (20A) are provided on a surface of the transparent resin layer (23) on an opposite side to the design layer (22).

## Description

### Technical Field

The present disclosure relates to a decorative sheet and a display apparatus including a decorative sheet.

### Background Art

To impart designability to a display apparatus that displays image light, it has been considered that a decorative sheet is provided so as to face a display surface of the display apparatus and image light is displayed through the decorative sheet. A decorative sheet can impart designability matching with a surrounding environment to a display apparatus. Such a decorative sheet provided for a display apparatus has a light transmitting portion configured as a micropore structure so that image light of the display apparatus can penetrate through the decorative sheet. PTL 1 describes such a decorative sheet used for a display apparatus and a display apparatus equipped with a decorative sheet.

### Citation List

### Patent Literature

PTL 1: Japanese Unexamined Patent Application Publication No. 2020-034886

### Summary of Invention

### Technical Problem

A surface of a decorative sheet having a light transmitting portion is preferably flat in order to suppress light scattering. However, the disclosers of the present disclosure diligently conducted research on formation of asperities on a surface of a decorative sheet in order to implement a display apparatus with a decorative sheet excellent in designability and having various textures and touches.

It is a task of the present disclosure to provide a decorative sheet and a display apparatus excellent in designability in view of the above point.

### Solution to Problem

A decorative sheet according to an embodiment of the present disclosure includes a design layer, and a transparent resin layer laminated on the design layer. Light transmitting portions are formed by providing apertures in the design layer. Asperities are provided on a surface of the transparent resin layer on an opposite side to the design layer.

In the decorative sheet, a minimum distance between the surface of the transparent resin layer and a surface of the design layer on the transparent resin layer side may be greater than or equal to 10 um and less than or equal to 500 um. In the decorative sheet, a value of haze may be lower than or equal to 40%, a value of maximum height Pz of a profile curve of the surface of the transparent resin layer may be less than or equal to 40 um, and a value of arithmetic mean roughness Ra of a roughness curve of the surface of the transparent resin layer may be less than or equal to 3 µm.

In the decorative sheet, the asperities do not have to have a periodic pattern. In the decorative sheet, the light transmitting portions may have a periodic pattern, and the asperities may have a periodic pattern, and, where a period of the asperities of the light transmitting portions is Pa and a period of the pattern of the asperities is P1, a relationship P1·Pa/|P1 - Pa| ≤ 300 um may be satisfied.

The decorative sheet may further include a diffusion layer laminated on the transparent resin layer, the transparent resin layer may be located between the diffusion layer and the design layer, and the diffusion layer may contain particles and a binder resin. A particle size of each of the particles may be less than half a pitch of the asperities. A particle size of each of the particles may be less than 25% of the pitch of the asperities. A particle size of each of the particles may be less than 10% of the pitch of the asperities.

The transparent resin layer may contain a second binder resin and second particles. Part of the second binder resin may be located in the apertures. Some of the second particles may be located in the apertures. The asperities may include recesses at locations respectively facing the apertures.

In the decorative sheet, an aperture ratio may be higher than or equal to 10%. In the decorative sheet, a period of the pattern of the light transmitting portions may be less than or equal to 120 µm.

A display apparatus according to the present disclosure includes an image light emitting device that emits image light, and the decorative sheet facing the image light emitting device.

A manufacturing method for a display apparatus according to the present disclosure includes a step of preparing a decorative panel in which the decorative sheet is laminated on a panel member, and a step of disposing the decorative panel and an image light emitting device that emits image light such that the decorative panel and the image light emitting device face each other.

### Advantageous Effects of Invention

The decorative sheet and the display apparatus according to the present disclosure are excellent in designability.

### Brief Description of Drawings

[Fig. 1A] Fig. 1A is a perspective view that shows a display apparatus according to a present embodiment and that shows a state where the display apparatus is on.
[Fig. 1B] Fig. 1B is a perspective view that shows the display apparatus according to the present embodiment and that shows a state where the display apparatus is off.
[Fig. 2] Fig. 2 is an exploded perspective view that shows the display apparatus according to the present embodiment.
[Fig. 3] Fig. 3 is a front view that shows the display apparatus according to the present embodiment.
[Fig. 4] Fig. 4 is a longitudinal sectional view that shows the display apparatus according to the present embodiment and that is taken along the line A-A in Fig. 3.
[Fig. 5A] Fig. 5A is a longitudinal sectional view that shows a preparation process for a decorative sheet according to the present embodiment.
[Fig. 5B] Fig. 5B is a longitudinal sectional view that shows the preparation process for a decorative sheet according to the present embodiment.
[Fig. 5C] Fig. 5C is a longitudinal sectional view that shows the preparation process for a decorative sheet according to the present embodiment.
[Fig. 5D] Fig. 5D is a longitudinal sectional view that shows the preparation process for a decorative sheet according to the present embodiment.
[Fig. 5E] Fig. 5E is a longitudinal sectional view that shows the preparation process for a decorative sheet according to the present embodiment.
[Fig. 5F] Fig. 5F is a longitudinal sectional view that shows the preparation process for a decorative sheet according to the present embodiment.
[Fig. 6] Fig. 6 is a longitudinal sectional view that shows a decorative sheet according to the present embodiment.
[Fig. 7A] Fig. 7A is a graph that shows a profile curve of a surface of Sample A.
[Fig. 7B] Fig. 7B is a graph that shows a profile curve of a surface of Sample B.
[Fig. 7C] Fig. 7C is a graph that shows a profile curve of a surface of Sample C.
[Fig. 7D] Fig. 7D is a graph that shows a profile curve of a surface of Sample D.
[Fig. 7E] Fig. 7E is a graph that shows a profile curve of a surface of Sample E.
[Fig. 7F] Fig. 7F is a graph that shows a profile curve of a surface of Sample F.
[Fig. 7G] Fig. 7G is a graph that shows a profile curve of a surface of Sample G.
[Fig. 7H] Fig. 7H is a graph that shows a profile curve of a surface of Sample H.
[Fig. 7I] Fig. 7I is a graph that shows a profile curve of a surface of Sample I.
[Fig. 7J] Fig. 7J is a graph that shows a profile curve of a surface of Sample J.
[Fig. 7K] Fig. 7K is a graph that shows a profile curve of a surface of Sample K.
[Fig. 7L] Fig. 7L is a graph that shows a profile curve of a surface of Sample L.
[Fig. 7M] Fig. 7M is a graph that shows a profile curve of a surface of Sample M.
[Fig. 7N] Fig. 7N is a graph that shows a profile curve of a surface of Sample N.
[Fig. 7O] Fig. 7O is a graph that shows a profile curve of a surface of Sample O.
[Fig. 7P] Fig. 7P is a graph that shows a profile curve of a surface of Sample P.
[Fig. 7Q] Fig. 7Q is a graph that shows a profile curve of a surface of Sample Q.
[Fig. 8] Fig. 8 is a longitudinal sectional view that shows a decorative sheet including a diffusion layer.
[Fig. 9] Fig. 9 is a longitudinal sectional view that shows a modification of the decorative sheet.
[Fig. 10] Fig. 10 is a longitudinal sectional view that shows another modification of the decorative sheet.

### Description of Embodiments

Hereinafter, an embodiment of the present disclosure (hereinafter, referred to as "present embodiment") will be described with reference to the drawings. In the drawings attached to the present specification, for the sake of easiness of illustration and understanding, the scale, dimensional aspect ratio, and the like are changed or exaggerated as needed from those of real ones.

A decorative sheet 20 and a display apparatus 10 according to the present embodiment will be described.

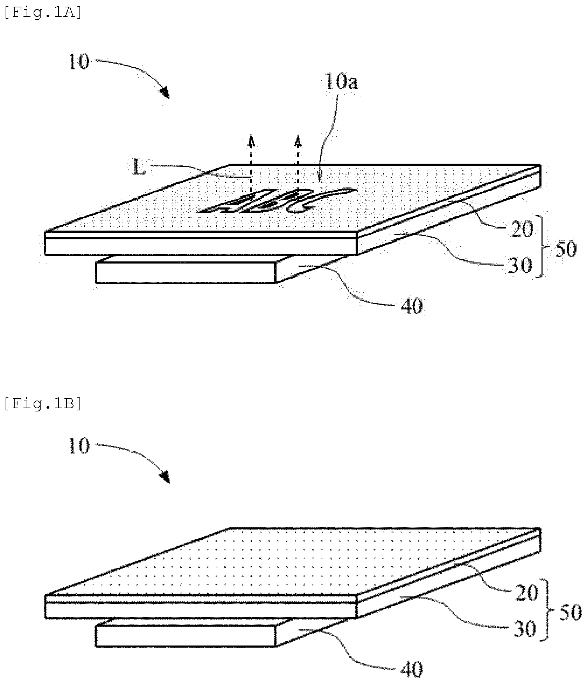

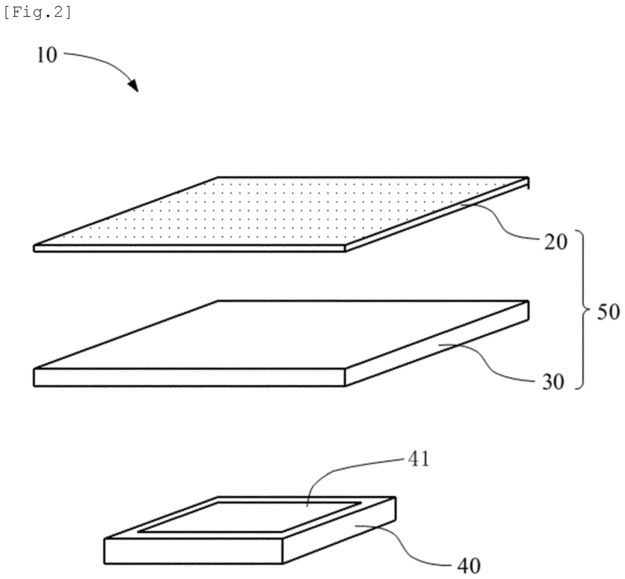

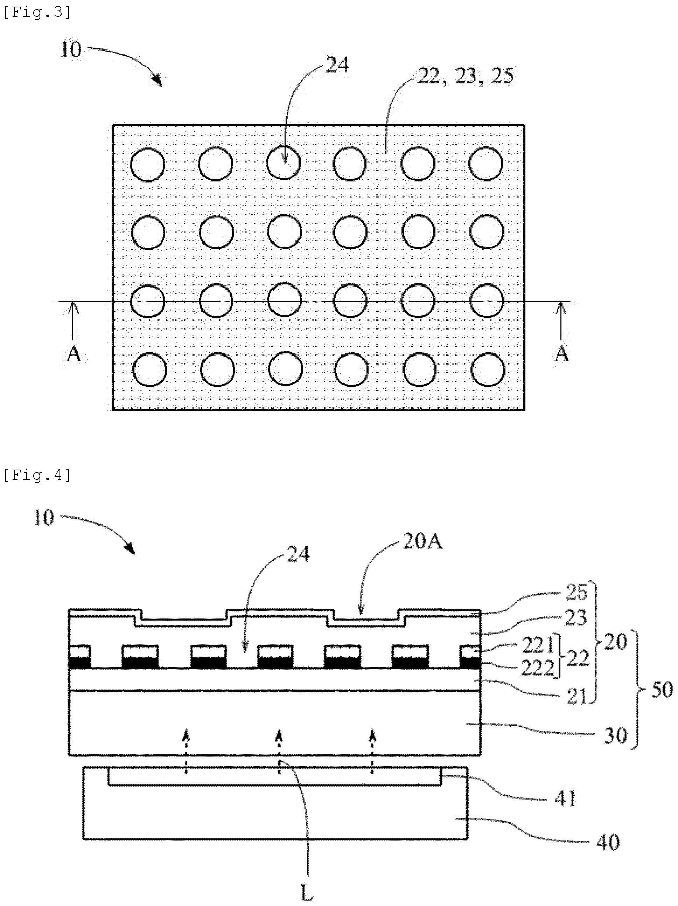

Fig. 1A is a perspective view that shows the display apparatus 10 according to the present embodiment and that shows a state where the display apparatus 10 is on. Fig. 1B is a perspective view that shows the display apparatus 10 according to the present embodiment and that shows a state where the display apparatus 10 is off. Fig. 2 is an exploded perspective view that shows the display apparatus 10 according to the present embodiment. Fig. 3 is a front view that shows the display apparatus 10 according to the present embodiment. Fig. 4 is a longitudinal sectional view that shows the display apparatus 10 according to the present embodiment and that shows a sectional view taken along the line A-A in Fig. 3.

To clarify the dimensional relationship among the drawings, some of the drawings show a common first direction D1, a common second direction D2, and a common third direction D3 with arrows indicated by common reference signs. The distal end sides of the arrows are first sides of the directions. An arrow pointing forward from the sheet of a drawing along a direction perpendicular to the sheet is represented by, for example, a symbol in which a dot is drawn in a circle as shown in Fig. 3. An arrow pointing backward from the sheet of a drawing along a direction perpendicular to the sheet is represented by, for example, a symbol in which a cross is drawn in a circle as shown in Fig. 4.

The display apparatus 10 includes at least an image light emitting device 40 and a decorative sheet 20. In the illustrated example, the display apparatus 10 further includes a panel member 30. The decorative sheet 20 and the panel member 30 make up a decorative panel 50.

The image light emitting device 40 is any video display device that emits image light L. The image light emitting device 40 may display image light L that shows a specific icon. The image light emitting device 40 may include a light source unit and a light blocking sheet including a translucent portion and a light blocking portion. The image light emitting device 40 emits image light L through the translucent portion of the light blocking sheet. The image light emitting device 40 is capable of displaying an icon with a shape corresponding to the shape of the translucent portion. The light source unit may be a surface light source unit that emits planar light. The surface light source unit may be a direct backlight or may be an edge-lit backlight. The light source unit may be a light source, such as an LED. The image light emitting device 40 may be a liquid crystal display, a plasma display, an organic EL display, or the like.

The decorative sheet 20 includes a design layer 22. The decorative sheet 20 has light transmitting portions 24 formed as a micropore structure in the design layer 22 such that the image light L from the image light emitting device 40 can penetrate through the decorative sheet 20. In other words, the light transmitting portions 24 are respectively located in regions in which micropores of the design layer 22 are provided. The decorative sheet 20 has asperities 20A resulting from embossing at its surface and is excellent in designability. This point is one of the features of the decorative sheet 20 according to the present embodiment. The structure of the decorative sheet 20 will be described in detail later.

The panel member 30 is a transparent member. The panel member 30 is made of a material that transmits light. The panel member 30 may have a plate shape. The panel member 30 is, for example, an interior member or an exterior member of a mobile object, such as a vehicle, including an automobile and a railroad, an airplane, a ship, and a space ship. In a specific example, the panel member 30 may be a center console, a door trim, an instrument panel, or the like of an automobile. The panel member 30 may be an interior member or an exterior member of a building. The panel member 30 may be a member installed in an electronic device, a piece of furniture, or an electric appliance. In a specific example, the panel member 30 may be a touch sensor portion, various membrane switches, and the like of a television or a monitor.

Examples of the material of the panel member 30 include a polycarbonate resin, an acrylic resin, and an ABS resin. The thickness of the panel member 30 is, for example, greater than or equal to 0.5 mm and less than or equal to 5 mm.

The display apparatus 10 is configured such that image light L emitted from the image light emitting device 40 passes through the decorative sheet 20 and is displayed at an image display portion 10a on the surface of the decorative sheet 20. The image display portion 10a is a region in the surface of the decorative sheet 20, opposed to the image light emitting device 40 in the third direction D3. As will be described later, the image display portion 10a displays image light L from the image light emitting device 40 through the light transmitting portions 24 of the decorative sheet 20.

In the specification, a state where there is no emission of image light L from the image light emitting device 40 is defined as a state where the display apparatus 10 is off. A state where there is emission of image light L from the image light emitting device 40 is defined as a state where the display apparatus 10 is on.

In the state where the display apparatus 10 is off, only the design of the decorative sheet 20 is viewed, and the presence of the image light emitting device 40 is not perceived. In the state where the display apparatus 10 is on, image light L emitted from the image light emitting device 40 is displayed in the design of the decorative sheet 20, that is, at the image display portion 10a on the surface of the decorative sheet 20.

In this way, the display apparatus 10 having the decorative sheet 20 according to the present embodiment has the same designability as the center console or the like of an ordinary automobile in the state where the display apparatus 10 is off and displays information with image light L on the center console or the like in the state where the display apparatus 10 is on.

Next, the configuration of the decorative sheet 20 will be described in detail.

As shown in Fig. 1, the decorative sheet 20 has a structure in which a base layer 21, the design layer 22, and a transparent resin layer 23 are sequentially laminated in the third direction D3 from a back side. The design layer 22 has a structure in which a shielding layer 222 and a pattern layer 221 are sequentially laminated from the back side. In the illustrated example, the decorative sheet 20 further includes a surface protecting layer 28 laminated on the transparent resin layer 23.

In the specification, a side of the decorative sheet 20, facing the image light emitting device 40, that is, a side closer to the image light emitting device 40 in the third direction D3, is defined as the back side or a lower side. A side viewed from a viewer, that is, a side away from the image light emitting device 40 in the third direction D3, which is the opposite side, is defined as a front side or an upper side. As illustrated, the third direction D3 is a lamination direction in which component elements are laminated. In the illustrated example, the component elements expand in the first direction D1 and the second direction D2 that are orthogonal to the third direction D3.

In addition, the decorative sheet 20 has the light transmitting portions 24 formed as a micropore structure in the design layer 22. In other words, the decorative sheet 20 has the light transmitting portions 24 respectively located at apertures of the design layer 22. The apertures of the design layer 22 are formed as non-formed portions of the design layer 22. As shown in Fig. 3, the light transmitting portions 24 are disposed so as to be distributed in the design layer 22 when viewed from the front side. The light transmitting portions 24 just have to be formed at least in a region corresponding to the image display portion 10a on the surface of the decorative sheet 20.

The base layer 21 is a layer made up of a transparent film and appropriately supports the design layer 22 laminated on the base layer 21. The base layer 21 is made of a material that can transmit visible light and appropriately support the design layer 22.

Examples of the material of the base layer 21 include polymethyl methacrylate, polyethylene terephthalate, polyethylene naphthalate, polycarbonate, polystyrene, and cyclic polyolefin. In consideration of visible light transparency, appropriate support of the design layer 22, and the like, the base layer 21 preferably has a thickness greater than or equal to 10 um and less than or equal to 500 µm.

In the specification, the word "transparent" means to have transparency to such an extent that can see the other side of a member from one side through the member and means to have, for example, a visible light transmittance higher than or equal to 30%, preferably higher than or equal to 50%, and more preferably higher than or equal to 70%. A visible light transmittance is determined as a mean of total light transmittance at each wavelength when measured at an incident angle of zero degrees in units of 1 nm within the range of measurement wavelength 380 nm to 780 nm with a spectrophotometer ("UV-3100PC" made by Shimadzu Corporation and compliant with JIS K 0115).

The pattern layer 221 forms any pattern, such as woodgrain pattern, marble pattern, geometrical pattern, carbon tone, stripe, polka dot, and monochrome. The pattern layer 221 is made of a material that can form a pattern.

Examples of the material of the pattern layer 221 include polymethyl methacrylate, polyethylene terephthalate, polyethylene naphthalate, polycarbonate, polystyrene, and cyclic polyolefin. The thickness of the pattern layer 221 is, for example, greater than or equal to 10 um and less than or equal to 500 µm.

The shielding layer 222 is disposed on the back side of the pattern layer 221 and covers the pattern layer 221 from a side where the image light emitting device 40 is disposed. The shielding layer 222 has a function to absorb light so that image light L from the image light emitting device 40 does not enter the pattern layer 221. The visible light transmittance of the shielding layer 222 is preferably lower than or equal to 80%, more preferably lower than or equal to 90%, and furthermore preferably lower than or equal to 95%. The shielding layer 222 can contain, for example, light-absorbing particles in a binder resin. Examples of the light-absorbing particles include a black pigment, such as carbon black and titanium black.

Examples of the material of the shielding layer 222 include polymethyl methacrylate, polyethylene terephthalate, polyethylene naphthalate, polycarbonate, polystyrene, and cyclic polyolefin. The thickness of the shielding layer 222 is, for example, greater than or equal to 1 um and less than or equal to 20 µm.

The decorative sheet 20 may be the one that does not include the shielding layer 222. However, with the presence of the shielding layer 222, it is possible to suppress entry of image light L into the pattern layer 221, so it is possible to reduce a situation in which a design represented by the pattern layer 221 and image light L having penetrated through the pattern layer 221 are mixedly viewed. In other words, it is possible to effectively suppress the degradation of color reproducibility of an image due to absorption of visible light in a specific wavelength range with the pattern layer 221. For this reason, the decorative sheet 20 may include the shielding layer 222.

The transparent resin layer 23 is a layer of transparent resin and has the asperities 20A formed on a front-side surface by embossing. The transparent resin layer 23 is made of a material suitable for embossing.

The asperities of the transparent resin layer 23 may be disposed in correspondence with the design of the design layer 22. For example, in an example in which the design layer 22 provides a woodgrain pattern, recesses or projections of the asperities may be formed in a region facing a duct of the woodgrain pattern in the third direction D3. The recesses or the projections of the asperities may be formed in a region facing a late wood part (summer wood part or autumn wood part) of an annual ring of the woodgrain pattern in the third direction D3. The recesses or the projections of the asperities may be formed in a region facing nodes of the woodgrain pattern in the third direction D3. According to such examples, a combination of the design layer 22 and the transparent resin layer 23 presents a natural texture, so the designability of the decorative sheet 20 can be improved.

Examples of the material of the transparent resin layer 23 include polymethyl methacrylate, polyethylene terephthalate, polycarbonate, urethane, ABS resin, and polyvinyl chloride. From the viewpoint of heat resistance, abrasion resistance, and the like, polymethyl methacrylate, polycarbonate, or ABS resin is preferable. The thickness of the transparent resin layer 23 is, for example, greater than or equal to 10 um and less than or equal to 500 µm.

The light transmitting portions 24 are respectively located in the apertures of the design layer 22. The light transmitting portions 24 transmit image light L from the image light emitting device 40. In the example shown in Fig. 4, the apertures of the design layer 22 are filled with the transparent resin layer 23. The light transmitting portions 24 are made up of part of the transparent resin layer 23.

In the decorative sheet 20 shown in Fig. 3, when viewed from a viewer side in the third direction D3, the circular light transmitting portions 24 are arranged in a grid. In other words, the light transmitting portions 24 are arranged at a constant pitch in the first direction D1 and also arranged at a constant pitch in the second direction D2 orthogonal to the first direction D1. In an example, the circular light transmitting portions 24 with a diameter of 80 um may be arranged at intervals of 80 um in a square grid. In this example, the proportion (hereinafter, referred to as "aperture ratio") of the light transmitting portions 24 in the image display portion 10a on the surface of the decorative sheet 20 is about 20%.

The aperture ratio of the decorative sheet 20 is the proportion of area occupied by the light transmitting portions 24 in the decorative sheet 20 when viewed in the third direction D3 in the illustrated example in a plan view of the decorative sheet 20. The aperture ratio of the decorative sheet 20 can be calculated by using the expression (Aperture ratio) = (Total area of the light transmitting portions 24)/((Total area of the design layer 22) + (Total area of the light transmitting portions 24)). An aperture ratio can be measured with a digital microscope VHX-6000 made by Keyence Corporation. For the design layer 22 including the shielding layer 222, in a state where light is applied from the back side of the decorative sheet, a picture of an enlarged image of the decorative sheet is taken, and parts through which light penetrates are determined as apertures.

In a state where the display apparatus 10 is on, image light L penetrates through the light transmitting portions 24 of the decorative sheet 20 and is viewed by a viewer outside. The aperture ratio at the image display portion 10a on the surface of the decorative sheet 20 is preferably higher than or equal to 10% in order for the viewer to be able to view image light L so as to be practically usable as a display apparatus, preferably higher than or equal to 15% in order for the viewer to be able to view sufficiently bright image light L, more preferably higher than or equal to 20% in order for the viewer to be able to view further sufficiently bright image light L, may be higher than or equal to 25%, and furthermore may be higher than or equal to 30%.

In a state where the display apparatus 10 is off, the pattern of the pattern layer 221 of the decorative sheet 20 is viewed. The aperture ratio at the image display portion 10a on the surface of the decorative sheet 20 is preferably lower than or equal to 65% in order for the viewer to be able to view the design of the decorative sheet 20 so as to be practically usable, and more preferably lower than or equal to 60% in order for the viewer to be able to view the design of the decorative sheet 20 further clearly.

In the example shown in Fig. 4, the light transmitting portions 24 are filled with the transparent resin layer 23. In other words, resin forming the transparent resin layer is located in the apertures. With this configuration, the transparent resin layer 23 and the base layer 21 are in contact with each other in a region corresponding to the light transmitting portions 24 of the decorative sheet 20. As a result of research conducted by the disclosers of the present disclosure, it is found that, when a difference in refractive index between the base layer 21 and the transparent resin layer 23 is smaller than or equal to 0.2, the light transmitting portions 24 are not attractive when the decorative sheet 20 is viewed at a short distance. In addition, it is also found that, when the light transmitting portions 24 are filled with the transparent resin layer 23, scattering of light that occurs due to the asperities of the design layer 22 and the light transmitting portions 24 configured as the apertures of the design layer 22 is suppressed, and the deterioration of the quality of both the design of the decorative sheet 20 visually recognized by the viewer and image light L that penetrates through the decorative sheet 20 is suppressed.

The decorative sheet 20 according to the present embodiment is the one in which the circular light transmitting portions 24 are arranged in a grid when viewed from the front. The decorative sheet 20 according to the present disclosure just has to be the one in which the light transmitting portions 24 are formed as the apertures of the design layer 22 and is not limited to this configuration. However, from the viewpoint of suppressing scattering of image light L and suppressing occurrence of unevenness in brightness of image light L, the light transmitting portions 24 of the decorative sheet 20 according to the present disclosure are preferably circular and are preferably arranged in a grid.

The surface protecting layer 28 is made of a transparent material and is a layer for protecting the decorative sheet 20. The material of the surface protecting layer 28 is not limited as long as the material has such a function. Examples of the material of the surface protecting layer 28 include thermosetting resins, such as acrylic resin, urethane resin, phenolic resin, urea melamine resin, epoxy resin, unsaturated polyester resin, and silicone resin, and ionizing radiation curable resins, such as chemical compounds having an ethylenically unsaturated bond group. The thickness of the surface protecting layer 28 is, for example, greater than or equal to 1 um and less than or equal to 20 µm.

Next, a manufacturing method for the decorative sheet 20 according to the present embodiment will be described.

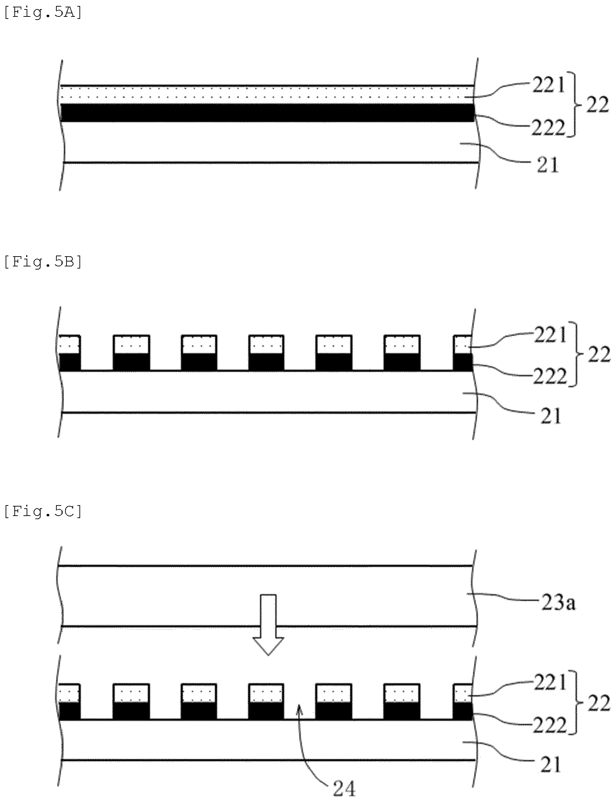

Figs. 5A to 5F are longitudinal sectional views that show a preparation process for the decorative sheet 20 according to the present embodiment.

In manufacturing the decorative sheet 20, initially, the design layer 22 is laminated on the base layer 21 as shown in Fig. 5A. In the illustrated example, the shielding layer 222 and the pattern layer 221 are sequentially laminated on the base layer 21. Laminating the design layer 22 on the base layer 21 may be performed by, for example, printing.

Subsequently, as shown in Fig. 5B, the light transmitting portions 24 that are apertures of the design layer 22 made up of the pattern layer 221 and the shielding layer 222 are formed.

The light transmitting portions 24 are formed by using, for example, laser technology. In a forming method using laser technology, initially, the design layer 22 is provided on the entire surface of the base layer 21. Subsequently, laser is applied to locations where the light transmitting portions 24 should be formed on the design layer 22. The design layer 22 at the locations where laser is applied is removed. The light transmitting portions 24 are provided at the locations where the design layer 22 is removed.

The light transmitting portions 24 can be formed by using photolithography technology. In a forming method using photolithography technology, initially, the design layer 22 is provided on the entire surface of the base layer 21. Subsequently, photoresist is applied to a side where the design layer 22 is provided. After that, a photomask provided with holes at the locations where the light transmitting portions 24 should be formed is provided on the photoresist. In other words, at the locations where the light transmitting portions 24 should be formed, photoresist melts in a development step. Subsequently, the design layer 22 at the locations from which photoresist has been removed is removed by being immersed in an etchant. The light transmitting portions 24 are provided at the locations where the design layer 22 is removed.

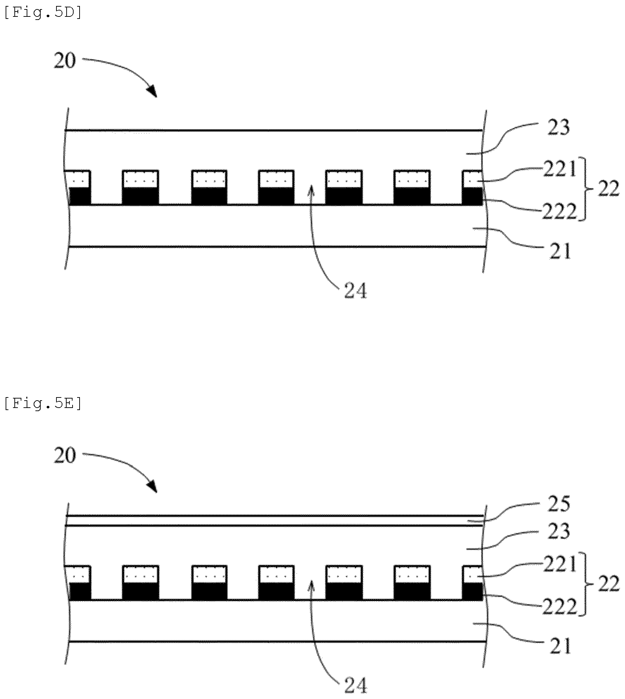

Subsequently, as shown in Figs. 5C and 5D, the transparent resin layer 23 is laminated on the design layer 22. In the illustrated example, the transparent resin layer 23 is formed by heat-laminating a transparent resin film 23a on the design layer 22. Not limited to this example, the transparent resin layer 23 can be prepared by drying or solidifying a coating film.

Subsequently, as shown in Fig. 5E, the surface protecting layer 28 is laminated on the transparent resin layer 23. Laminating the surface protecting layer 28 on the transparent resin layer 23 is performed by, for example, applying the material of the surface protecting layer 28 onto the transparent resin layer 23.

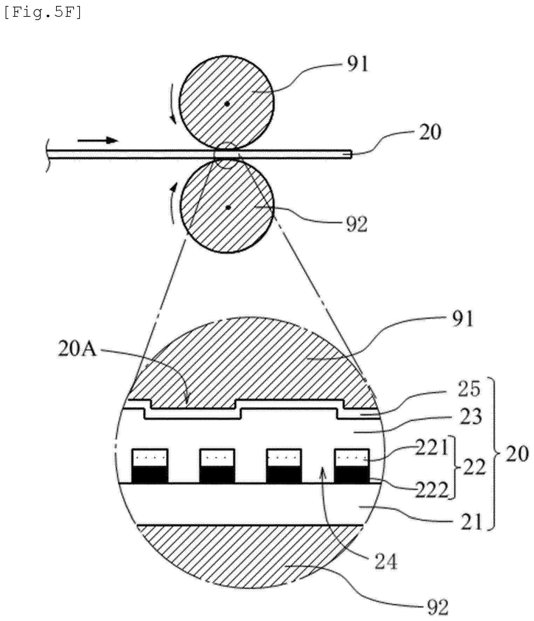

Finally, as shown in Fig. 5F, the asperities 20A are formed on the front-side surface of the decorative sheet 20 prepared in the above process. In the illustrated example, the asperities 20A are formed on the front-side surface of the decorative sheet 20 by passing the heated decorative sheet 20 between an emboss roll 91 and a backup roll 92 opposed to each other. The emboss roll 91 is, for example, a metal roller on the surface of which an asperity pattern is formed. The backup roll 92 is, for example, a rubber roll.

Through the above process, the decorative sheet 20 can be manufactured. In the illustrated example, the transparent resin film 23a is laminated on the design layer 22 and then the asperities 20A are formed. Alternatively, the asperities 20A may be formed on the transparent resin film 23a and then the transparent resin film 23a on which the asperities 20A are formed may be laminated on the design layer 22.

Next, features of the asperities 20A formed on the decorative sheet 20 according to the present embodiment will be described.

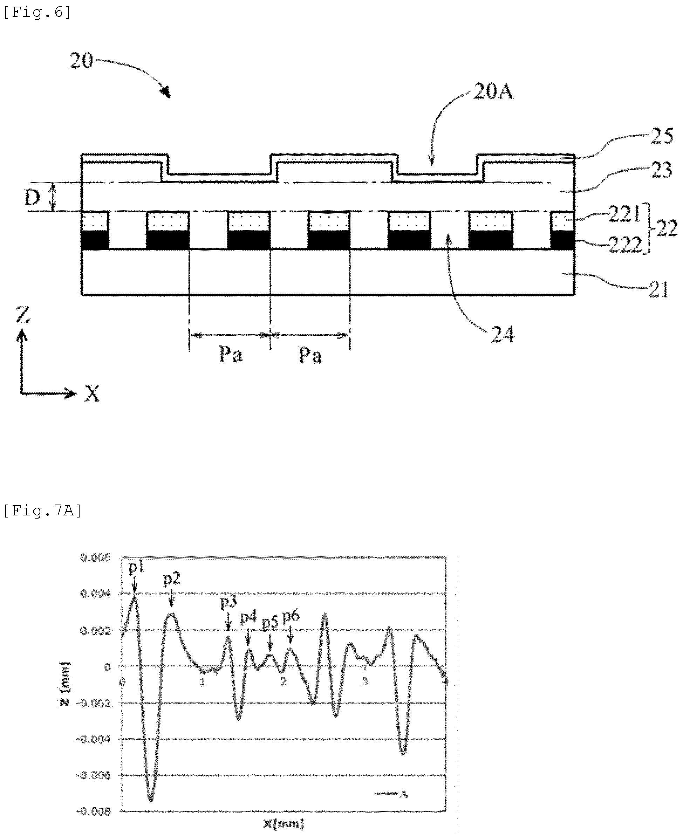

Fig. 6 is a longitudinal sectional view that shows the decorative sheet 20 according to the present embodiment.

As a minimum distance D between the top surface of the transparent resin layer 23 and the top surface of the design layer 22, shown in Fig. 6, shortens, scattering of light is more suppressed, and the quality of image light L that penetrates through the decorative sheet 20 improves. However, when the minimum distance D between the top surface of the transparent resin layer 23 and the top surface of the design layer 22 is too short, the pattern of the light transmitting portions 24 gets distorted. On the other hand, as the minimum distance D between the top surface of the transparent resin layer 23 and the top surface of the design layer 22 extends, occurrence of a moire (described later) is suppressed. From this viewpoint, the minimum distance D between the top surface of the transparent resin layer 23 and the top surface of the design layer 22 is preferably greater than or equal to 10 um and less than or equal to 500 um. The top surface of the transparent resin layer 23 is a surface of the transparent resin layer 23 on an opposite side to the design layer 22. The top surface of the design layer 22 is a surface of the design layer 22 on the transparent resin layer 23 side.

The disclosers of the subject application prepared Samples A to Q of the decorative panel 50 in order to evaluate the decorative sheet 20 on which the asperities 20A were formed. Each of the decorative panels 50 was prepared by sticking the decorative sheet 20 on which the asperities 20A of a different type are formed to polycarbonate with a thickness of 500 um via an optical clear adhesive (OCA) with a thickness of 50 um to 100 µm.

The circular light transmitting portions 24 with a diameter of 50 um were arranged on the decorative sheet 20 in a square grid at a pitch of 120 um. The decorative sheet 20 was prepared by sticking a 50 um to 70 µm-thick polyethylene terephthalate film, on which the asperities 20A were formed, to a 125 µm-thick multilayer body made up of the base layer 21 and the design layer 22, via a 50 um to 100 um-thick OCA.

The disclosers of the subject application measured the value of transmission haze for Samples A to Q. A transmission haze is determined by using a haze meter HM-150N (Murakami Color Research Laboratory) in accordance with JIS K 7136.

The disclosers of the subject application measured Pz (the maximum height of a profile curve), Pp (the maximum peak height of a profile curve), and Ra (the arithmetic mean roughness of a roughness curve) of a front-side surface for Samples A to Q with a stylus surface roughness meter. Pz, Pp, and Ra are defined by JIS B 0601: 2013 (ISO 4287: 1997, Amd. 1: 2009). Surfcorder ET4000L made by Kosaka Laboratory was used as the stylus surface roughness meter. Measurement conditions were such that the cut-off wavelength was 0.8 mm, the cut-off type was phase compensation, the measurement speed was 0.1 mm/s, the reference length was 0.8 mm, and the evaluation length (measurement length) was 4 mm.

The disclosers of the subject application evaluated the visibility of transmitted light for Samples A to Q. Specifically, the image light emitting device 40 that emits image light L showing a specific icon was disposed on the back side of each of Samples A to Q, and the visibility of image light L displayed on the front-side surface through each of Samples A to Q was evaluated. The visibility was evaluated as "Good" when the edge of the icon was able to be clearly recognized, the visibility was evaluated as "Not Bad" when the shape of the icon was able to be recognized, and the visibility was evaluated as "Bad" when the shape of the icon was significantly deformed.

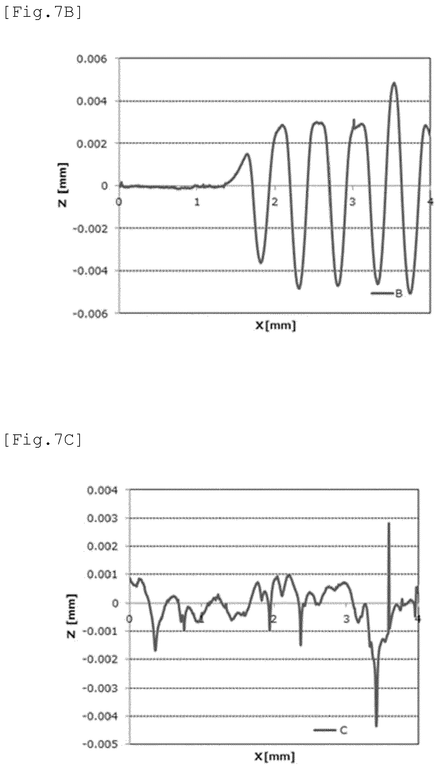

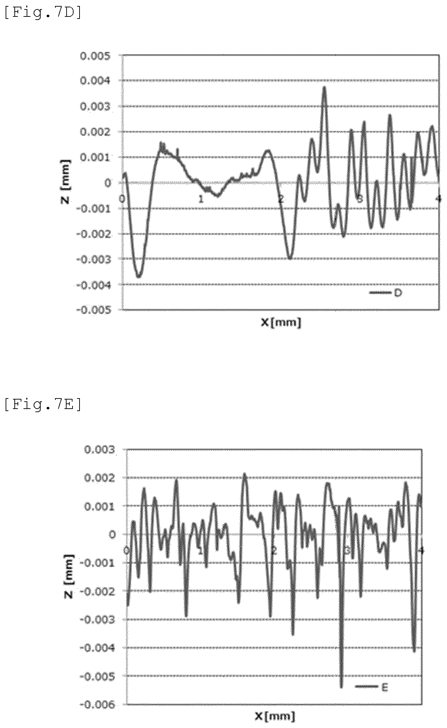

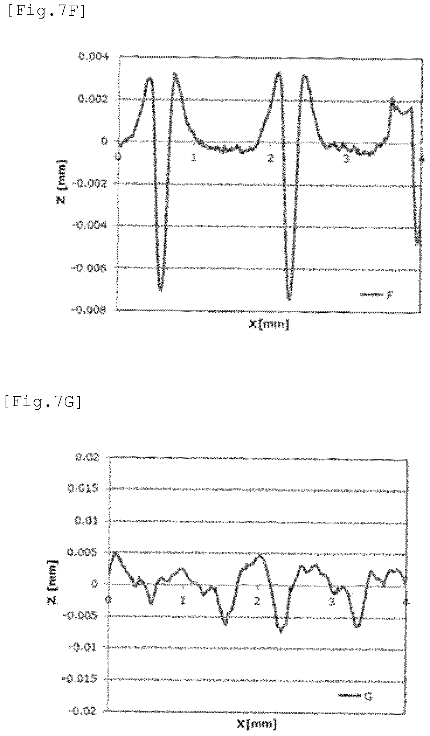

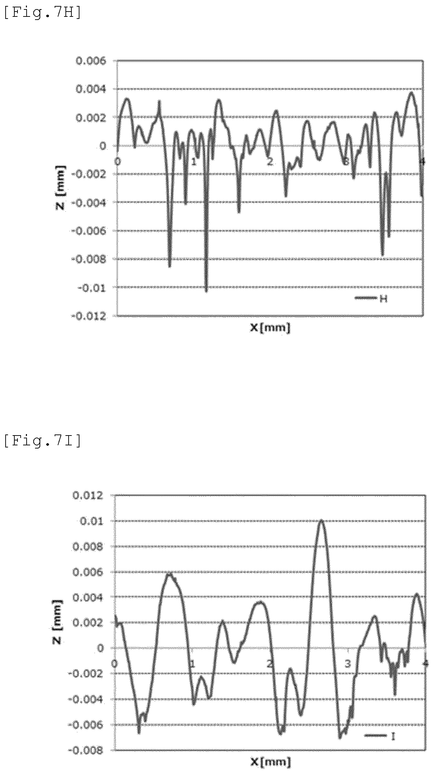

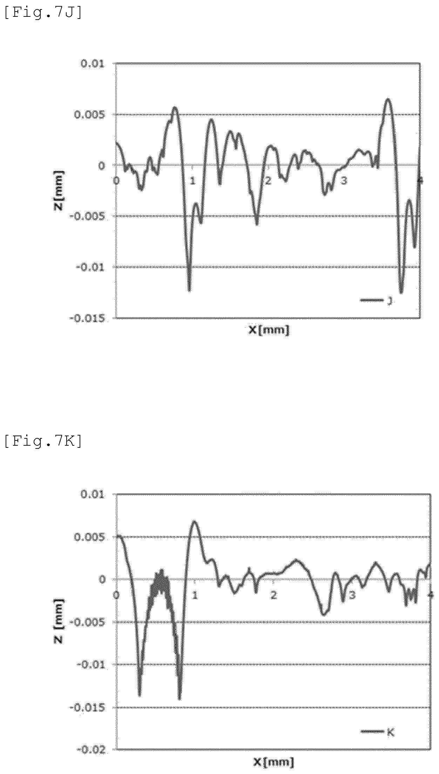

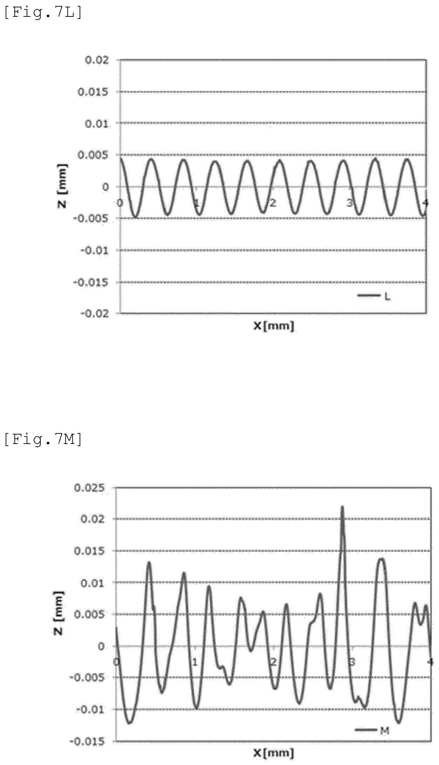

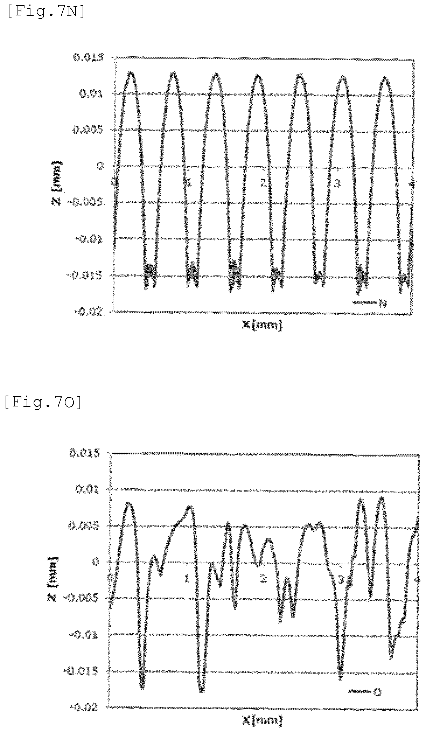

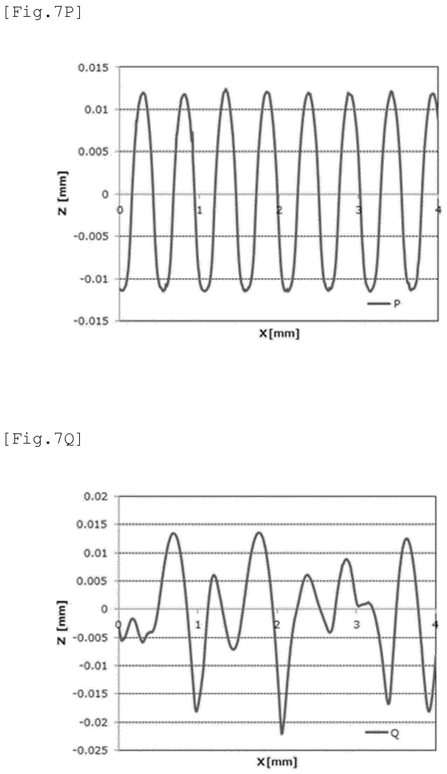

Table 1 shows the results of measurement and evaluation of Samples A to Q. Figs. 7A to 7Q are graphs that respectively show the profile curves of the surfaces of Samples A to Q.

**[Table 1]**

| SAMPLE NAME | EMBOSS NAME | HAZE [%] | Pz [*µ*m] | Pp [*µ*m] | Ra [*µ*m] | TRANSMITTED LIGHT EVALUATION |
|---|---|---|---|---|---|---|
| SAMPLE A | WOOD GRAIN 1 | 82 | 169 | 47 | 14 | GOOD |
| SAMPLE B | BIAS | 10.1 | 147 | 6.7 | 16 | GOOD |
| SAMPLE C | CROSS HATCH | 10.3 | 22.4 | 9.7 | 0.5 | GOOD |
| SAMPLE D | CARBON PATTERN | 123 | 122 | 46 | 10 | GOOD |
| SAMPLE E | 80 MESH | 171 | 8.2 | 28 | 09 | GOOD |
| SAMPLE F | TOMEHAN 1 | 19.7 | 14.0 | 4.4 | 1.3 | GOOD |
| SAMPLE G | LEATHER 1 | 198 | 27.3 | 10.4 | 22 | GOOD |
| SAMPLE H | MATT | 264 | 188 | 50 | 15 | NOT BAD |
| SAMPLE I | LEATHER 2 | 269 | 34.0 | 181 | 30 | GOOD |
| SAMPLE J | WOOD GRAIN 2 | 26.9 | 29.7 | 9.5 | 24 | NOT BAD |
| SAMPLE K | TWIG | 29.0 | 553 | 268 | 2.0 | GOOD |
| SAMPLE L | TOMEHAN 2 | 38.3 | 100 | 4.8 | 2.7 | GOOD |
| SAMPLE M | HAIRLINE | 39.5 | 44.4 | 26.7 | 59 | NOT BAD |
| SAMPLE N | SILK | 42.4 | 413 | 191 | 9.7 | NOT BAD |
| SAMPLE O | PEARSKIN | 47.9 | 428 | 132 | 49 | BAD |
| SAMPLE P | TOMEHAN 3 | 48.4 | 308 | 159 | 8.5 | NOT BAD |
| SAMPLE Q | GRAIN | 637 | 602 | 28.7 | 67 | BAD |

From the results of measurement and evaluation of Samples A to Q, it was found that the visibility of image light L tends to get better as the values of transmission haze, Pz, and Ra reduce. From this viewpoint, the haze of the decorative sheet 20 is preferably lower than or equal to 40%, more preferably lower than or equal to 35%, and further preferably lower than or equal to 30%. The Pz of the surface of the decorative sheet 20 is preferably less than or equal to 40 um, more preferably less than or equal to 35 µm, and further preferably less than or equal to 30 um. The Ra of the surface of the decorative sheet 20 is preferably less than or equal to 3 µm, more preferably less than or equal to 2.5 µm, and further preferably less than or equal to 2 µm.

In addition, the disclosers of the subject application found that a moire can occur between the pattern of the asperities 20A and the arrangement pattern of the light transmitting portions 24. In the decorative sheet 20 according to the present embodiment, the light transmitting portions 24 are arranged with a constant periodic pattern. For this reason, when the asperities 20A have a periodic pattern, a moire occurs between the periodic pattern of the asperities 20A and the periodic pattern of arrangement of the light transmitting portions 24. In order to suppress occurrence of the moire, preferably, the asperities 20A do not have a periodic pattern and have a random pattern.

Whether the asperities 20A have a periodic pattern can be determined in accordance with whether a value obtained by dividing a standard deviation of a peak-to-peak distance of the profile curve of the surface of the decorative sheet 20 by the mean of the peak-to-peak distance is lower than 10%. In other words, when the value obtained by dividing the standard deviation of the peak-to-peak distance of the profile curve of the surface of the decorative sheet 20 by the mean of the peak-to-peak distance is lower than 10%, it is determined that the asperities 20A have a periodic pattern. On the other hand, when the value obtained by dividing the standard deviation of the peak-to-peak distance of the profile curve of the surface of the decorative sheet 20 by the mean of the peak-to-peak distance is higher than or equal to 10%, it is determined that the asperities 20A do not have a periodic pattern. For example, the peaks of the profile curve, higher than or equal to Pz of the surface of the decorative sheet 20 before the asperities 20A are formed, are extracted.

Evaluation of the peak-to-peak distance is performed on not only between adjacent peaks but also an every other peak-to-peak distance, an every third peak-to-peak distance, an every fourth peak-to-peak distance, and the like. By referring to Fig. 7A, distances between adjacent peaks are, for example, a distance between p1 and p2, a distance between p2 and p3, and a distance between p3 and p4. Every other peak-to-peak distances are, for example, a distance between p1 and p3, a distance between p2 and p4, and a distance between p3 and p5. Every third peak-to-peak distances are, for example, a distance between p1 and p4, a distance between p2 and p5, and a distance between p2 and p6. For peak-to-peak distances greater than the every other peak-to-peak distance, evaluation is performed up to an every fifth peak-to-peak distance within the range in which evaluation can be performed from the profile curves shown in Figs. 7A to 7Q.

Table 2 shows the results of evaluation of the peak-to-peak distance of the profile curve of the surface of the decorative sheet 20 for each of Samples D, F, G, H, and M as an example. Table 2 also shows whether there is a moire. For Sample D, a region from which micro asperities were viewed in a right-side region in Fig. 7D was evaluated.

**[Table 2]**

| SAMPLE NAME | EMBOSS NAME | | BETWEEN ADJACENT PEAKS | EVERY OTHER | EVETY THIRD | EVERY FOURTH | EVERY FIFTH | MOIRE |
|---|---|---|---|---|---|---|---|---|
| SAMPLE D | CARBON PATTERN | MEAN DISTANCE [mm] | 0.166 | 0.335 | 0502 | 0.668 | 0.833 | YES |
| | | STANDARD DEVIATION [mm] | 0.010 | 0.016 | 0.019 | 0.019 | 0.020 | |
| | | STANDARD DEVIATION/MEAN [%] | **6.3** | **4.9** | **3.9** | **2.8** | **2.4** | |
| SAMPLE F | TOMEHAN 1 | MEAN DISTANCE [mm] | 0.681 | 1703 | | | | YES |
| | | STANDARD DEVIATION [mm] | 0.592 | 0.018 | | | | |
| | | STANDARD DEVIATION/MEAN [%] | 86.9 | **1.1** | | | | |
| SAMPLE G | LEATHER 1 | MEAN DISTANCE [mm] | 0.346 | 0.718 | 1111 | 1521 | 1941 | NO |
| | | STANDARD DEVIATION [mm] | 0.154 | 0.243 | 0.278 | 0.295 | 0.316 | |
| | | STANDARD DEVIATION/MEAN [%] | 446 | 338 | 250 | 194 | 163 | |
| SAMPLE H | MATT | MEAN DISTANCE [mm] | 0.219 | 0.443 | 0.662 | 0.887 | 1113 | NO |
| | | STANDARD DEVIATION [mm] | 0.087 | 0.133 | 0.166 | 0.197 | 0.224 | |
| | | STANDARD DEVIATION/MEAN [%] | 397 | 300 | 251 | 222 | 20.1 | |
| SAMPLE M | HAIRLINE | MEAN DISTANCE [mm] | 0.371 | 0.710 | 1.064 | 1392 | 1740 | YES |
| | | STANDARD DEVIATION [mm] | 0.090 | 0.068 | 0.103 | 0.099 | 0.047 | |
| | | STANDARD DEVIATION/MEAN [%] | 24.4 | **9.5** | **9.6** | **7.1** | **2.7** | |

In Samples D, F, and M from which a moire was found, a value obtained by dividing the standard deviation of the peak-to-peak distance of the profile curve by the mean of the peak-to-peak distance is lower than 10%. On the other hand, in Samples G and H from which no moire was found, a value obtained by dividing the standard deviation of the peak-to-peak distance of the profile curve by the mean of the peak-to-peak distance is higher than or equal to 10%.

In this way, occurrence of a moire can be suppressed by forming the asperities 20A with no periodic pattern in the decorative sheet 20.

Even when a moire occurs, no practical issue arises if the period of the moire fringes can be suppressed to a size that a human cannot identify. A period Pm (µm) of moire fringes is calculated by using the expression Pm = P1·Pa/|P1 - Pal. P1 is a period (µm) of the asperity pattern. Pa is a period (µm) of the pattern of the light transmitting portions 24 as shown in Fig. 6. A size that a human can identify can be calculated by using the expression (Size [m] that a human can identify) = 2n/360/60/(Visual acuity) × (Distance [m] to an object).

For example, a size that a human with a visual acuity of 1.0 views from a distance of 100 cm is about 291 um. From this, when the period of moire fringes exceeds 300 µm, the moire fringes are more easily viewed by a human. From this viewpoint, when the asperities 20A have a periodic pattern, the relationship P1·Pa/|P1 - Pa| ≤ 300 um is preferably satisfied where the period of the asperity pattern is P1 and the period of the pattern of the light transmitting portions 24 is Pa.

As described above, the decorative sheet 20 and the display apparatus 10 according to the present embodiment are excellent in designability.

Incidentally, when the transparent resin layer 23 with asperities is used, ambient light from luminaires and the like scatters due to the asperities 20A of the transparent resin layer 23 when reflected by the decorative sheet 20. Depending on the shape of the asperities 20A, rays of scattered light reflected by the transparent resin layer 23 can interfere with one another. Due to interference of scattered light, bright sections and dark sections appear on the decorative sheet 20. If the bright sections and the dark sections occur, visibility decreases. In other words, a decrease in visibility due to reflected light can occur.

When the transparent resin layer 23 with the asperities 20A is used, light applied from the back side scatters due to the pattern of the light transmitting portions 24. Depending on the shape and the like of the asperities 20A, rays of light scattered due to the pattern of the light transmitting portions 24 can interfere with one another. Due to interference of scattered light, bright sections and dark sections appear on the decorative sheet 20. In other words, at the time of viewing transmitted light, a decrease in visibility can occur.

In addition, transmitted light scattered due to the pattern of the light transmitting portions 24 and reflected light scattered due to the asperities 20A of the transparent resin layer 23 may interfere with each other.

At any time when visibility decreases due to reflected light, or when visibility decreases due to transmitted light, or when visibility decreases due to reflected light and transmitted light, a light and dark pattern that mixedly includes bright luminescent spots and dark defective spots is viewed. Luminescent spots and defective spots have sizes viewable by the viewer of the decorative sheet 20.

A decrease in visibility due to reflected light can occur as a result of reflection of ambient light from luminaires and the like by the decorative sheet 20. In a light and dark pattern using reflected light, bright sections are more easily attracted. Because of a decrease in visibility due to reflected light, the design layer 22 is hard to display a design intended in a state where the display apparatus is off, with the result that the designability of the design layer 22 can be significantly decreased. A feel of unevenness different from the asperities 20A of the transparent resin layer 23 can be visually recognized due to interference of light caused by scattered reflection on the asperities 20A of the transparent resin layer 23.

A decrease in visibility at the time of viewing transmitted light can occur in a state where the display apparatus is on. Image light applied from the back side to the decorative sheet scatters due to the pattern of the light transmitting portions 24. Because rays of image light scattered interfere with one another, a bright section and a dark section irrelevant to an image to be displayed appear. Thus, the visibility of the image decreases. In a state where the display apparatus is on, when a display image overlaps a dark section having occurred due to interference among rays of scattered light, defective spots appear in the display image, with the result that the visibility of the display image remarkably deteriorates.

In a state where the display apparatus is on, ambient light scattered and reflected by the asperities 20A of the transparent resin layer 23 and image light L scattered by the pattern of the light transmitting portions 24 can interfere with each other. Due to interference between ambient light and image light, the quality of a display image can degrade.

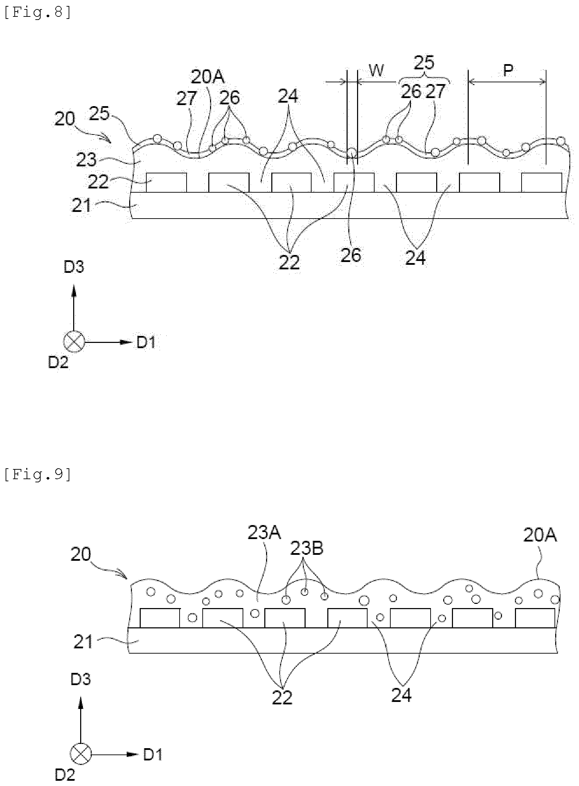

In order to suppress a decrease in visibility due to reflected light and a decrease in visibility at the time of viewing transmitted light, the decorative sheet 20 may include a diffusion layer 25 as shown in Fig. 8. The diffusion layer 25 includes particles 26 and a binder resin 27. The binder resin 27 holds the particles 26. The particles 26 are held by the binder resin 27 in a dispersed manner. As will be demonstrated in an example (later), a decrease in visibility can be suppressed by the diffusion layer 25.

A decrease in visibility due to reflected light is presumably influenced by specular reflected light in a specific direction. Furthermore, a decrease in visibility due to reflected light is presumably strongly influenced by specular reflected light at a partial flat surface of the transparent resin layer 23 with no asperities. A decrease in visibility at the time of viewing transmitted light is presumably due to a locally strong change of an optical path of image light. From this estimated cause, diffusion in the diffusion layer 25 is preferably further homogeneous. For this reason, as shown in Fig. 8, a particle size W of the particles 26 (see Fig. 8) may be less than half a pitch P of the asperities 20A of the transparent resin layer 23. According to this example, it is possible to effectively reduce both a decrease in visibility due to reflected light and a decrease in visibility at the time of viewing transmitted light. The particle size W (µm) of each of the particles 26 is the maximum length or maximum width of the particles 26 in the cross section of the decorative sheet 20, taken along the third direction D3.

When the particle size of each particle is too large, the particle is visually recognized by a viewer. When the particle size of the particles is too large, the shapes of the particles are reflected in the surface asperity shape of the transparent resin layer 23, and the surface asperity shape of the transparent resin layer 23 can be not formed in a desired shape. From these points, the particle size W of each particle may be less than 25% and may be less than 10% of the pitch P of the asperities 20A of the transparent resin layer 23.

In making a comparison between the particle size W of the particles 26 and half the pitch P of the asperities 20A of the transparent resin layer 23, the cross section of the decorative sheet 20 is viewed in 10 visual fields with a magnification higher than or equal to 500 times and lower than or equal to 2000 times, and the mean of the particle sizes W that are the maximums among the particles 26 present in the respective visual fields is determined as the particle size W of the particles 26. The pitch P of the asperities 20A of the transparent resin layer 23 is an interval between adjacent projections of the asperities 20A. In making a comparison between the particle size W of the particles 26 and half the pitch P of the asperities of the transparent resin layer 23, the pitch P of the asperities 20A of the transparent resin layer 23 is determined by measuring a distance between top parts of adjacent two projections in the cross section of the decorative sheet 20, taken along the third direction, at selected 10 locations and taking the mean of the distances.

The diffusion layer 25 can be formed by applying a resin composition including the particles 26 and the binder resin 27 to the asperity surface of the transparent resin layer 23 and drying and solidifying or curing the resin composition. Coating of the resin composition may be performed by die coating or spray coating. The material of the binder resin 27 is not limited. Examples of the material of the binder resin 27 include polymethyl methacrylate, polyethylene terephthalate, polycarbonate, urethane, ABS resin, and polyvinyl chloride. From the viewpoint of heat resistance, abrasion resistance, and the like, polymethyl methacrylate, polycarbonate, or ABS resin is preferable.

Since the surface of the diffusion layer 25 is provided with asperities, the thickness of the binder resin 27 may be thinner than the mean particle size of the particles 26 because the surface of the diffusion layer 25 has asperities. The thickness of the binder resin 27 is determined by measuring the thickness of the diffusion layer 25 where the particles 26 are not present at selected 10 locations and taking the mean of the thicknesses. The particles 26 may contribute to forming the surface of the diffusion layer 25 into asperities. A refractive interface or a reflection interface may be formed between the particles 26 and the binder resin 27. Examples of the particles 26 include a metallic compound, a porous material containing gas, a resin bead that holds a metal compound therearound, white microparticles, and simple air bubbles.

A decrease in visibility at the time of viewing transmitted light can be suppressed by increasing the aperture ratio of the decorative sheet 20. Specifically, from the viewpoint of suppressing a decrease in visibility at the time of viewing transmitted light, the aperture ratio of the decorative sheet 20 is preferably higher than or equal to 10%, more preferably higher than or equal to 20%, and further preferably higher than or equal to 30%. On the other hand, when the aperture ratio of the decorative sheet 20 exceeds 40%, a decrease in visibility at the time of viewing transmitted light is difficult to be further suppressed even when the aperture ratio of the decorative sheet 20 is increased. Therefore, the aperture ratio of the decorative sheet 20 may be lower than or equal to 40%.

In addition, a decrease in visibility at the time of viewing transmitted light can be suppressed also with the configuration of the light transmitting portions 24 of the decorative sheet 20. Specifically, a decrease in visibility at the time of viewing transmitted light can be suppressed by reducing the period Pa (see Fig. 6) of the pattern of the light transmitting portions 24. For example, when the period Pa (see Fig. 6) of the pattern of the light transmitting portions 24 is reduced while the aperture ratio of the decorative sheet 20 is maintained, a decrease in visibility at the time of viewing transmitted light can be reduced. The period Pa of the pattern of the light transmitting portions 24 may be less than or equal to 120 µm, may be less than or equal to 100 µm, or may be less than or equal to 80 um. Therefore, when the area of each light transmitting portion 24 in a plan view is reduced and an interval between adjacent two of the light transmitting portions 24 is reduced, a decrease in visibility at the time of viewing transmitted light can be suppressed while the aperture ratio of the decorative sheet 20 is maintained.

In addition, from the viewpoint of suppressing a decrease in visibility due to reflected light and a decrease in visibility at the time of viewing transmitted light, the transparent resin layer 23 may include a second binder resin 23A and second particles 23B as shown in Fig. 9. The second binder resin 23A holds the second particles 23B. Part of the second binder resin 23A is located in the apertures. The second particles 23B are held by the second binder resin 23A in a dispersed manner. Some of the second particles 23B are located in the apertures. As will be demonstrated in an example (later), a decrease in visibility can be suppressed by the diffusion layer 25. The second binder resin 23A may be the same as the material of the above-described transparent resin layer 23. The second binder resin 23A may also be polymethyl methacrylate, polyethylene terephthalate, polycarbonate, urethane, ABS resin, polyvinyl chloride, or the like. A refractive interface or a reflection interface may be formed between the second particles 23B and the second binder resin 23A. Examples of the second particles 23B include a metallic compound, a porous material containing gas, a resin bead that holds a metal compound therearound, white microparticles, and simple air bubbles.

The word "second" used for the second binder resin 23A and the second particles 23B is used for the purpose of being distinguished from the binder resin 27 and the particles 26 of the diffusion layer 25.

In order to suppress a decrease in visibility by configuring diffusion in the transparent resin layer 23 as further homogeneous diffusion, the particle size of the second particles 23B may be less than half the pitch P of the asperities of the transparent resin layer 23. When the particle size of the second particles 23B is too large, the shapes of the second particles 23B are reflected in the surface asperity shape of the transparent resin layer 23, and the surface asperity shape of the transparent resin layer 23 can be not formed in a desired shape. From these points, the particle size of the second particles 23B may be less than 25% and may be less than 10% of the pitch P of the asperities 20A of the transparent resin layer 23.

The particle size (µm) of each of the second particles 23B is determined similarly to the particle size of each of the above-described particles 26. In other words, the maximum length or maximum width of the second particle 23B in the cross section of the decorative sheet 20, taken along the third direction D3. In making a comparison between the particle size of the second particles 23B and half the pitch P of the asperities 20A of the transparent resin layer 23, the cross section of the decorative sheet 20 is viewed in 10 visual fields with a magnification higher than or equal to 500 times and lower than or equal to 2000 times, and the mean of the particle sizes W that are the maximums among the second particles 23B present in the respective visual fields is determined as the particle size W of the second particles 23B.

Here, experimental results obtained from research on a decrease in visibility due to reflected light and a decrease in visibility at the time of viewing transmitted light will be described.

Samples 1 to 20 of a decorative sheet were prepared. Each of Samples 1 to 20 included the base layer 21, the design layer 22, and the transparent resin layer 23. In Samples 1 to 18, and Sample 20, the transparent resin layer 23 was subjected to embossing, and the transparent resin layer 23 had the asperities 20A. Among Samples 1 to 18, and Sample 20, the depth of embossing was changed. The maximum height Pz of each of the profile curves of Samples 1 to 18, and Sample 20 fluctuated. The maximum height Pz of each of the profile curves of Samples 1 to 18, and Sample 20 was greater than the maximum height Pz of Sample 19 not subjected to embossing.

Samples 1 to 11 each further included the diffusion layer 25 covering the transparent resin layer 23. The diffusion layer 25 was prepared by applying a resin composition including the particles 26 and the binder resin 27 onto the transparent resin layer 23 by spray coating to form a coating film and drying the coating film. The prepared diffusion layer 25 included the particles 26 and the binder resin 27. A diffusion layer A of which the mean particle size of the particles 26 in the diffusion layer 25 was 4 um was formed for Samples 1 to 3. A diffusion layer B of which the mean particle size of the particles 26 in the diffusion layer 25 was 20 um was formed for Samples 4 to 11. No diffusion layer 25 was provided for Samples 12 to 20.

The period (pitch) and size of the light transmitting portions (apertures) in the design layer 22 were changed among Samples 1 to 20. As shown in Fig. 3, the light transmitting portions 24 were arranged regularly in a square array. The configuration of each Sample is shown in Table 3.

In Sample 20 of the decorative sheet, the transparent resin layer 23 included the second binder resin 23A and the second particles 23B. Sample 20 was prepared as follows. Initially, as in the case of the other Samples, the design layer 22 was formed on the base layer 21. Subsequently, the following electron beam curable (EB) resin composition was printed on the design layer by gravure coating. The amount of application of the electron beam curable (EB) resin was set such that the amount of application after the resin composition was dried and cured was 11 g/m². Electron beam with an acceleration voltage of 165 kV and an irradiation intensity of 50 kGy (5 Mrad) was applied to the uncured resin layer to cure the electron beam curable resin composition, with the result that a transparent resin layer (diffusion layer C) having diffusibility was prepared. After that, an asperity surface was formed on the transparent resin layer having diffusibility by performing embossing.

### [Ionizing Radiation Curable Resin Composition]

Bifunctional urethane acrylate oligomer (weight average molecular weight: 8000): 64 parts by mass
Hexafunctional urethane acrylate oligomer (weight average molecular weight: 6000): 16 parts by mass
Urethane beads (spherical shape: a particle size of 3 um): 20 parts by mass

### [Table 3]

**TABLE 3 CONFIGURATIONS AND EVALUATION RESULTS OF SAMPLES**

| SAMPLE | DECORATIVE SHEET | | | | | | EVALUATION RESULTS | |
|---|---|---|---|---|---|---|---|---|
| | ASPERITIES | DIFFUSION LAYER | APERTURE RATIO (%) | TRANSMITTING PORTION INT ERVAL (*µ*m) | Ra (*µ*m) | Pz (*µ*m) | DECREASE IN VISIBILITY DUE TO TRANSMITTED LIGHT | DECREASE IN VISIBILITY DUE TO REFLECTED LIGHT |
| 1 | PROVIDED | A | 32 | 100 | 1 | 11 | A | A |
| 2 | PROVIDED | A | 33 | 100 | 2 | 14 | B | A |
| 3 | PROVIDED | A | 12 | 100 | 2 | 14 | B | A |
| 4 | PROVIDED | B | 32 | 100 | 2 | 20 | B | B |
| 5 | PROVIDED | B | 28 | 80 | 2 | 21 | c | B |
| 6 | PROVIDED | B | 22 | 80 | 2 | 20 | C | B |
| 7 | PROVIDED | B | 33 | 100 | 2 | 20 | C | B |
| 8 | PROVIDED | B | 27 | 100 | 2 | 20 | c | B |
| 9 | PROVIDED | B | 23 | 100 | 2 | 18 | C | B |
| 10 | PROVIDED | B | 21 | 120 | 2 | 18 | C | B |
| 11 | PROVIDED | B | 21 | 120 | 3 | 29 | D | B |
| 12 | PROVIDED | NOT PROVIDED | 27 | 80 | 1 | 16 | B | D |
| 13 | PROVIDED | NOT PROVIDED | 23 | 80 | 1 | 16 | B | D |
| 14 | PROVIDED | NOT PROVIDED | 32 | 100 | 1 | 16 | B | D |
| 15 | PROVIDED | NOT PROVIDED | 27 | 100 | 1 | 16 | c | D |
| 16 | PROVIDED | NOT PROVIDED | 23 | 100 | 1 | 16 | c | D |
| 17 | PROVIDED | NOT PROVIDED | 20 | 120 | 1 | 16 | c | D |
| 18 | PROVIDED | NOT PROVIDED | 20 | 120 | 3 | 27 | D | D |
| 19 | NOT PROVIDED | NOT PROVIDED | 20 | 120 | 02 | 3.0 | A | D |
| 20 | PROVIDED | C | 12 | 100 | 2 | 14 | B | A |

Whether the transparent resin layer 23 has asperities was entered in the column "ASPERITIES" in Table 3. The transparent resin layer of Sample 19 was not subjected to embossing. Whether there is a diffusion layer 25 was entered in the column "DIFFUSION LAYER" in Table 3. No diffusion layer 25 other than the transparent resin layer 23 was provided to Samples 12 to 20. The aperture ratio (%) of the decorative sheet 20 was entered in the column "APERTURE RATIO (%)" in Table 3. The arrangement pitch Pa (µm) of the light transmitting portions (apertures) of the design layer was entered in the column "TRANSMITTING PORTION PERIOD (µm)" in Table 3. Measured values of the arithmetic mean roughness Ra (µm) of a roughness curve and the maximum height Pz (µm) of the profile curve on the asperities 20A of the decorative sheet 20 were respectively entered in the column "Ra (µm)" and the column "Pz (µm)" in Table 3. "Ra (µm)" and "Pz (µm)" for Samples having a diffusion layer are measured values at the surface of the diffusion layer.

Evaluation of the visibility of transmitted light was performed for each Sample. Specifically, the image light emitting device 40 was disposed on the back side of each of Samples 1 to 20. The image light emitting device 40 included a surface light source unit that emits light in a planar shape and a light blocking panel including a translucent portion and a light blocking portion. The image light emitting device 40 was capable of emitting image light L through the translucent portion of the light blocking panel. The image light emitting device 40 was able to display an icon with a shape corresponding to the shape of the translucent portion. Evaluation of the visibility of image light L penetrating through each of Samples 1 to 20 and displayed on the front-side surface was performed. Whether there was a dark section in an icon due to interference of transmitted light was checked. "A" was entered in the column "VISIBILITY OF TRANSMITTED LIGHT" for Samples from which no dark section was viewed at all. "B" was entered in the column "VISIBILITY OF TRANSMITTED LIGHT" for Samples for which a dark section was realized when viewed carefully but it did not influence the visibility of an icon at all. "C" was entered in the column "VISIBILITY OF TRANSMITTED LIGHT" for Samples for which there was a dark section realized with an ordinary attention but it did not influence the visibility of an icon. "D" was entered in the column "VISIBILITY OF TRANSMITTED LIGHT" for Samples that were at acceptable level as products but there was a dark section.

Evaluation of the visibility due to reflected light was performed for each Sample. Specifically, whether there was a light and dark pattern of a bright section and a dark section in Samples 1 to 20 was checked under a fluorescent light. "A" was entered in the column "VISIBILITY OF REFLECTED LIGHT" for Samples from which no light and dark pattern was viewed even when a relative position between the fluorescent light and the Sample or a viewing direction of the Sample was changed. "B" was entered in the column "VISIBILITY OF REFLECTED LIGHT" for Samples for which a light and dark pattern was realized when viewed carefully but it did not degrade the designability of the design layer. "C" was entered in the column "VISIBILITY OF REFLECTED LIGHT" for Samples for which there was some light and dark pattern realized with an ordinary attention but it did not degrade the designability of the design layer. "D" was entered in the column "VISIBILITY OF REFLECTED LIGHT" for Samples that were at acceptable level as products but there was a light and dark pattern.

In Samples 1 to 18, and Sample 20, the pitch P of the asperities of the transparent resin layer 23 was 160 um. The particle size of particles contained in the diffusion layer A of each of Samples 1 to 3 was 4 um. In Samples 1 to 3, the particle size W of the diffusion layer was 4 um and was 2.5% of the pitch P of the asperities of the transparent resin layer 23. In Samples 4 to 11, the particle size W of the diffusion layer B was 20 um and was 12.5% of the pitch P of the asperities of the transparent resin layer 23. In Sample 20, the particle size of the second particles 23B of the transparent resin layer 23 was 6 um and was 3.75% of the pitch P of the asperities of the transparent resin layer 23. In Samples 1 to 11, and Sample 20, the particles were not visually recognized or the asperity shape of the transparent resin layer 23 was not significantly distorted by the presence of the particles.

One embodiment of the present disclosure has been described; however, the decorative sheet and the display apparatus according to the present disclosure are not limited to the present embodiment. The decorative sheet and the display apparatus according to the present disclosure may be implemented in other various modes, and various omissions, replacements, or modifications are possible without departing from the gist of the present disclosure. For example, the panel member 30 may be omitted from the display apparatus 10. In other words, in the above-described example, the image light emitting device 40 is laminated on the decorative panel 50. Alternatively, the image light emitting device 40 may be laminated on the decorative sheet 20.

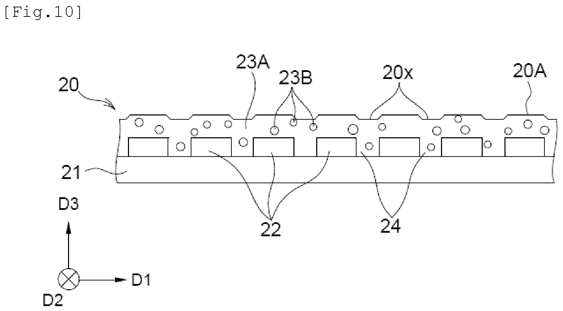

In the above-described example, the transparent resin layer 23, the binder resin 27, and the second binder resin 23A may be made of a thermoplastic resin. The transparent resin layer 23, the binder resin 27, and the second binder resin 23A may be made of a cured material of a curable resin composition. As shown in Fig. 10, in an example in which the transparent resin layer 23 is prepared from a cured material of a curable resin composition, the asperities 20A can be formed in the transparent resin layer 23 in accordance with the conditions of cure treatment. In the example shown in Fig. 10, recesses 20x of the asperities 20A are formed so as to face the apertures of the design layer 22. In the above-described example, the pitch of the apertures 24 and the pitch of the asperities 20A were different from each other. In the example shown in Fig. 10, the pitch of the apertures 24 and the pitch of the asperities 20A coincide with each other. In the example shown in Fig. 10, the asperities 20A can be formed without embossing.

In the example shown in Figs. 9 and 10, the transparent resin layer 23 contains the second particles 23B. The decorative sheet 20 shown in Figs. 9 and 10 may further include the diffusion layer 25 described with reference to Fig. 8.

### Reference Signs List

- 10: display apparatus
- 10a: image display portion
- 20: decorative sheet
- 20S: sample
- 20A: asperities
- 20x: recess
- 21: base layer
- 22: design layer
- 221: pattern layer
- 222: shielding layer
- 23: transparent resin layer
- 23A: second binder resin
- 23B: second particle
- 24: light transmitting portion, aperture
- 25: diffusion layer
- 26: particle
- 27: binder resin
- 28: surface protecting layer
- 30: panel member
- 40: image light emitting device
- 41: image light exit plane
- 50: decorative panel
- 91: emboss roll
- 92: backup roll
- L: image light

## Claims

1. A decorative sheet comprising:
a design layer; and a transparent resin layer laminated on the design layer, wherein
light transmitting portions are respectively provided at apertures of the design layer, and
asperities are provided on a surface of the transparent resin layer on an opposite side to the design layer.

2. The decorative sheet according to claim 1, wherein
a minimum distance between the surface of the transparent resin layer and a surface of the design layer on the transparent resin layer side is greater than or equal to 10 um and less than or equal to 500 um.

3. The decorative sheet according to claim 1, wherein
a value of transmission haze is lower than or equal to 40%,
a value of maximum height Pz of a profile curve of the surface of the transparent resin layer is less than or equal to 40 um, and
a value of arithmetic mean roughness Ra of a roughness curve of the surface of the transparent resin layer is less than or equal to 3 um.

4. The decorative sheet according to claim 1, wherein
the asperities do not have a periodic pattern.

5. The decorative sheet according to claim 1, wherein
the light transmitting portions have a periodic pattern, and the asperities have a periodic pattern, and
where a period of the pattern of the light transmitting portions is Pa and a period of the pattern of the asperities is P1, a relationship P1·Pa/|P1 - Pa| ≤ 300 um is satisfied.

6. The decorative sheet according to any one of claims 1 to 5, further comprising
a diffusion layer laminated on the transparent resin layer, wherein
the transparent resin layer is located between the diffusion layer and the design layer, and
the diffusion layer contains particles and a binder resin.

7. The decorative sheet according to claim 6, wherein
a width of each of the particles is less than half a pitch of the asperities.

8. The decorative sheet according to claim 6 or 7, wherein
an aperture ratio is higher than or equal to 10%.

9. The decorative sheet according to any one of claims 6 to 8, wherein
a period of the pattern of the light transmitting portions is less than or equal to 120 um.

10. The decorative sheet according to any one of claims 1 to 9, wherein
the transparent resin layer contains a second binder resin and second particles.

11. The decorative sheet according to claim 10, wherein
part of the second binder resin is located in the apertures.

12. The decorative sheet according to claim 10 or 11, wherein
some of the second particles are located in the apertures.

13. The decorative sheet according to any one of claims 10 to 12, wherein
the asperities include recesses at locations respectively facing the apertures.

14. A display apparatus comprising:
an image light emitting device that emits image light; and
the decorative sheet according to any one of claims 1 to 13, disposed so as to be opposed to the image light emitting device.
